# EUROPEAN PATENT APPLICATION

(11) **EP 4 378 805 A1**
(43) Date of publication of application: **05.06.2024**
(21) Application number: 22211199.9
(22) Date of filing: 02.12.2022
(51) Int. Cl.: B62D 35/00

(54) **AIR GUIDING DEVICE FOR A TRAILER, IN PARTICULAR FOR A UTILITY VEHICLE, AND TRAILER, IN PARTICULAR FOR A UTILITY VEHICLE**

(71) Applicant: ZF CV Systems Europe BV, 1170 Brüssel (BE)
(72) Inventor: Ramirez Alvarez, Luis Carlos, 2774 PJ Voorburg (NL); Mikos, Mateusz, 63-600 Kepno (PL); Bolisega, Przemyslaw, 57-400 Nowa Ruda (PL)
(74) Representative: Ohlendorf, Henrike

(57) **Abstract**

An inventive air guiding device (10) for a trailer (100a), in particular for a utility vehicle (100b), comprises a first air guiding section (11) and a second air guiding section (12) arranged side-by-side in a principal elongation direction (E1) of the air guiding device (10), with a panel (20, 21) defining a contour (13) of the first air guiding section (11). A frame (30) comprises a first frame segment (31) that extends through the first air guiding section (11) and is covered by the panel (20, 21) and a second frame segment (32) that extends through the second air guiding section (12). A first surface portion (15) of the first air guiding section (11) has a greater hardness than a second surface portion (16) of the second air guiding section (12).

## Description

The present disclosure relates to an air guiding device for a trailer, in particular for a utility vehicle. The disclosure further relates to a trailer, in particular a trailer for a utility vehicle.

In other words, the disclosure relates to semitrailers and trailers, i.e., so-called O3- and O4-vehicles, respectively, according to "Consolidated Resolution on the Construction of Vehicles (R.E.3) Revision 6, ECE/TRANS/WP.29/78/Rev.6" as of 11 July 2017, optionally comprising a swing door, and to a rear aerodynamic device.

EP 2 731 855 A1 discloses a rear spoiler device for a vehicle, in particular a utility vehicle or a trailer, the rear spoiler device having at least one adjustable air guiding element for the purpose of aerodynamically guiding air and extending the contour of the lateral region of the rear of the vehicle. The air guiding element is adjustable between a travel position, in which it extends rearwards in a lateral region of the rear for the purpose of aerodynamically guiding air and extending the contour, and a stowed position, and the air guiding element is spring-pre-loaded into the extended travel position and is adjusted into the stowed position by pressing the air guiding element from the rear side counter against the spring pre-load.

"Agreement Concerning the Adoption of Harmonized Technical United Nations Regulations for Wheeled Vehicles, Equipment and Parts which can be Fitted and/or be Used on Wheeled Vehicles and the Conditions for Reciprocal Recognition of Approvals Granted on the Basis of these United Nations Regulations (Revision 3, including the amendments which entered into force on 14 September 2017), Addendum 57 - UN Regulation No. 58 Revision 3 - Amendment 2" specifies a safety requirement relating to a bottom area of any rear aerodynamic device of less than 500 mm. The regulation further specifies the use of a soft material, i.e., of a material having a hardness of < 60 Shore A on the outside of any protruding component of a rear aerodynamic device under a height of 2 m, including the applicability for trailers.

Furthermore, the rear aerodynamic device must allow locking in both the folded and unfolded position, also called a stowed position and a travelling position, respectively. The locking is required to guarantee that the position being set by the driver is kept without involuntarily changing. For example, in an intermodal transport, train operations require that the system must be kept closed and secured.

EP 3 543 090 B1 discloses a motor vehicle air guiding device, in particular for a lorry, wherein at least one flat air guiding wing can be connected or is connected to the vehicle in a lower connection region of a rear of the vehicle, wherein the lower connection region is arranged 50 to 220 cm, preferably 60 to 210 cm, in particular 80 to 210 cm above the lower wheel surface of a rear wheel of the motor vehicle, wherein the air guiding wing can be connected or is connected to the rear of the motor vehicle in the lower connection region without adjustment elements or actuator elements, wherein the air guiding wing can be connected or is connected to an upper air guiding element of the motor vehicle with the proviso that the air guiding wing, together with the upper air guiding element, can be transitioned - preferably, can be pivoted - from a resting position to an operating position and vice versa, and wherein the air guiding wing is designed to be flexible, or formed from a flexible material, characterized in that the air guiding wing consists of a more flexible material than the air guiding element, and/or is connected to the upper air guiding element via a predetermined breaking point or predetermined breaking line.

However, the construction may affect the durability of the air guiding device.

It is an object of the present disclosure to provide a technological contribution and to improve at least one aspect of the prior art. In particular, an object of the disclosure may be to provide a rear aerodynamic device with improvements in safety and operatability while reducing the aerodynamic drag of a trailer.

The object is solved by the subject-matter according to independent claim 1 and according to the remaining independent claim. Dependent claims relate to optional embodiments.

According to an aspect of the disclosure, an air guiding device for a trailer, in particular for a utility vehicle, is provided. Therein, the air guiding device comprises a first air guiding section and a second air guiding section arranged side-by-side in a principal elongation direction of the air guiding device. The air guiding device also comprises a panel defining a contour of the first air guiding section. The air guiding device furthermore comprises a frame comprising a first frame segment that extends through the first air guiding section and is covered by the panel and a second frame segment that extends through the second air guiding section. A first surface portion of the first air guiding section has a greater hardness than a second surface portion of the second air guiding section.

In the following, the trailer, in particular for a utility vehicle, is referred to simply as a trailer without any intention of limiting the scope of the invention.

The air guiding device may be adapted to be vertically arranged at the trailer. In the mounted state, the principal elongation direction may be arranged vertically, and the first air guiding section may be an upper air guiding section and the second air guiding section may be a lower air guiding section.

The panel may be supported by the frame and in particular by the first frame segment. The panel may define the surface and thus the contour, shape and/or geometry of the first air guiding section. The panel may define and/or comprise the first surface portion.

The frame may be a one-piece frame with two segments, namely the first frame segment and the second frame segment. The first frame segment and the second frame segment may be mechanically connected with each other to form the integral frame. A predetermined braking line between the first frame segment and the second frame segment may be dispensed with. The frame may enable folding and/or unfolding the entire air guiding device. The frame may define a manipulation area for folding and/or unfolding the air guiding device. The frame may enable to arrange a hidden release mechanism to release the air guiding device from being locked and for transitioning between the travel state and the stowed state. The frame may withstand the operational forces to fold and unfold the air guiding device.

The first air guiding section may comprise the first surface portion and the second air guiding section may comprise the second surface portion. Therein, the first surface portion may comprise and/or characterize a surface of the first air guiding section and a volume with a finite thickness below the surface. The second surface portion may comprise and/or characterize a surface of the second air guiding section and a volume with a finite thickness below the surface. The first surface portion having a higher hardness than the second surface portion may relate to mechanical properties, in particular to plastic properties and/or elastic properties, of the first surface portion and the second surface portion.

In other words, the disclosure suggests a construction and design of a side panel of a trailer rear aerodynamic device, also referred to as a tail. The air guiding device may comprise an integral frame. The frame may be covered by different materials to achieve different hardness values of the first surface portion and the second surface portion. The design and in particular the frame may provide the possibility of fully automated and/or manual operation by means of a reinforced manipulation area being defined by the frame. The disclosure overcomes the potential deformation due to operations or during its lifetime in case of a frame-free air guiding device. An internal frame is recognized to be the robust alternative to the frame-free structure.

Optionally, the first frame segment has a first width and the second frame segment has a second width, wherein the second width is greater than the first width. Therein, the width may be defined as an elongation of the respective frame segment in a second direction perpendicular to the principal elongation direction. This embodiment may achieve for the second air guiding section, irrespective of the potential softness of the second surface portion, to have an improved mechanical stability, which may prevent flapping and/or delamination of components of the second air guiding section.

For the same reason, optionally, the air guiding device comprises a mounting portion for mounting the air guiding device to the trailer, and the second frame segment extends further in a second direction perpendicular to the principal elongation direction when viewed from the mounting portion than the first frame segment. In other words, in a travel state, the second frame segment may project further rearwards than the first frame segment.

Optionally, the second frame segment comprises a distal end arranged in parallel to the principal elongation direction. In other words, the second air guiding section is shaped so as to avoid a potentially sharp element pointing forwards or rearwards while the air guiding device is in the travel position. This may enhance safety. For the same reason, the second frame segment comprises a distal end arranged to enclose an angle with the principal elongation direction in the range of 0° to 5°. That is, in the mounted state, the distal end may be vertically arranged and/or slightly tilted with respect to a vertical.

Optionally, the frame extends more than 90 % throughout the air guiding device in the principal elongation direction and/or in a second direction perpendicular to the principal elongation direction. This may enhance mechanical properties of the air guiding device and in particular of the second air guiding section through which the second frame segment extends. Optionally, the second frame segment extends more than 90 % throughout the second air guiding section in the principal elongation direction and/or in the second direction. To further improve mechanical properties of the air guiding device and in particular of the second air guiding section, the second frame segment may extend more than 95 % throughout the second air guiding section in the principal elongation direction and/or in the second direction. In other words, the frame may extend across nearly the complete length and/or width of the air guiding device.

Optionally, the second frame segment comprises an outer frame portion, wherein the outer frame portion is a bent and/or curved profile and/or rod. The outer frame portion may surround inner frame portions. The outer frame portion may delimit the contour of the frame, i.e., any remaining frame portions may be surrounded by the outer frame portion. The outer frame portion may be a profile to be lightweight. The outer frame portion may be bent and/or curved to prevent a formation of sharp edges and to enable efficient manufacturing of the second frame segment.

Optionally, the air guiding device comprises a mounting portion for mounting the air guiding device to the trailer, the second frame segment comprises a proximal end and a distal end, wherein the proximal end is closer to the mounting portion than the distal end, and the second frame segment is shaped so that the proximal end extends further in the principal elongation direction than the distal end. That is, in the mounted state, the proximal end extends further in a vertical direction towards a ground than the distal end. This may enhance aerodynamic properties and, in the stowed state, may enhance access to the rear of the trailer.

Optionally, the air guiding device comprises a body defining a contour of the second air guiding section, and the body and the frame are integrally formed. In this embodiment, the body and the frame are a one-piece part, even though comprising different materials. For example, the frame may comprise metal and the body may comprise a plastic which may be formed and/or molded around the frame so as to enclose the frame.

Optionally, the second air guiding section comprises a layered structure. This enables to provide a mechanically stiff inner layer and/or body of the second air guiding section while the second surface portion may be formed by a soft layer, e.g., a shell.

Optionally, the layered structure is a glued and/or overmolded structure. This may enable an effective manufacture of the layered structure and enable using different materials and/or materials with different hardness values for different layers.

Optionally, the air guiding device comprises two shells defining a contour of the second air guiding section, wherein the frame is arranged between the shells. In this embodiment, the shells may form the second surface portion and/or may comprise or form a layered structure. The two shells may be arranged to enclose, cover and/or hide the frame.

Optionally, the second surface portion comprises an outer layer with a thickness of 6 mm or more. This embodiment may achieve a reliable safety measure. The outer layer may form the second surface portion. The softness of the second surface portion may be defined by the outer layer.

Optionally, the air guiding device comprises a filling member arranged to fill a volume surrounded by the first surface portion and/or the second surface portion. This embodiment may enable to fill the volume with a rigid and light-weight filling member to achieve stability and low weight of the air guiding device.

For the same reason, optionally, the filling member comprises a volume filler. The filler may be a porous material, such as a foam. The filler may be shaped to be arranged within the volume.

Optionally, the air guiding device comprises an actuation member for actuating the air guiding device for transitioning between a travel state and a stowed state. The actuation member may enable an automatic and/or a manual operation of the air guiding device. By an operation of the actuation device, the air guiding device may be folded in the stowed state or unfolded in the travel state. That is, transitioning between the travel state and the stowed state may refer to folding and/or unfolding the air guiding device.

Optionally, the actuation member is adapted to release the air guiding device from being locked in the travel state and/or in the stowed state by a manual operation. In this embodiment, the air guiding device may be released by the manual operation. This may serve as a fail-safe mechanism for an automated folding and/or unfolding.

Optionally, the air guiding device comprises a force transmission arrangement arranged within the second air guiding section and adapted to actuate the actuation member. The force transmission arrangement may transmit a force from an operating member to the actuation member and/or vice versa. Therein, the force transmission arrangement may comprise a cable, in particular a Bowden cable, and/or a slidably arranged push rod. The force transmission arrangement may be hidden within the second air guiding section.

Optionally, the force transmission arrangement is arranged within the second frame segment. In other words, the force transmission arrangement may be arranged through a tubing of the frame. That is, the second frame portion may comprise a hollow frame segment through which the force transmission arrangement may be guided. The hollow frame segment may be arranged in a centre of the second frame segment.

Optionally, the second air guiding section comprises a recess and the air guiding device comprises an operating member for manually operating the actuation device, the operating member being arranged in the recess. The operating member may be adapted to be manually operated. The operating member may be mechanically and functionally coupled with the actuation device via the force transmission arrangement. Arranging the operating member in the recess may provide a space-saving construction which may at the same time protect the operating member from unintended operation.

Optionally, the second air guiding section comprises a lower end and the recess is arranged at the lower end. This arrangement refers to the mounted state. In the mounted state, the second air guiding section is arranged below the first air guiding section. Arranging the recess and the operating member at the lower end may enable a user to reach the operating member efficiently and in a user-friendly manner.

Optionally, the second guiding section is arrangeable so that it projects, in a lateral direction, from a vehicle body of the trailer. This may improve the aerodynamics of the air guiding device. In this embodiment, edges and/or gaps at which aerodynamic eddies may form may be effectively reduced.

According to another aspect of the disclosure, a trailer, in particular for a utility vehicle, is provided. The trailer comprises a vehicle body with a rear and an air guiding device as described above, wherein the air guiding device is arranged at the rear. Therein, the air guiding device may comprise one or more of the above-described technical features to achieve a technical effect corresponding therewith.

Further advantages and technical features and their technical effects are disclosed in the figures and the description thereof.

The figures show optional embodiments as follows:
- Fig. 1: shows a schematic of a trailer, in particular for a utility vehicle, according to an aspect of the disclosure;
- Fig. 2: shows a rear of a trailer, in particular for a utility vehicle, according to an aspect of the disclosure;
- Fig. 3: shows a semi-transparent side view of an air guiding device according to an aspect of the disclosure;
- Fig. 4: shows a side view of an air guiding device according to an aspect of the disclosure;
- Fig. 5: shows another side view of an air guiding device according to an aspect of the disclosure;
- Fig. 6: shows an exploded view of an air guiding device according to an aspect of the disclosure;
- Fig. 7: shows a semi-transparent side view of an air guiding device according to an aspect of the disclosure;
- Fig. 8: shows an exploded view of a detail of an air guiding device according to an aspect of the disclosure;
- Fig. 9: shows an exploded view of an air guiding device according to an aspect of the disclosure;
- Fig. 10: shows a detail of a trailer, in particular for a utility vehicle, with an air guiding device, each according to an aspect of the disclosure; and
- Fig. 11: shows a sample of a second air guiding section of an air guiding device according to an aspect of the disclosure.

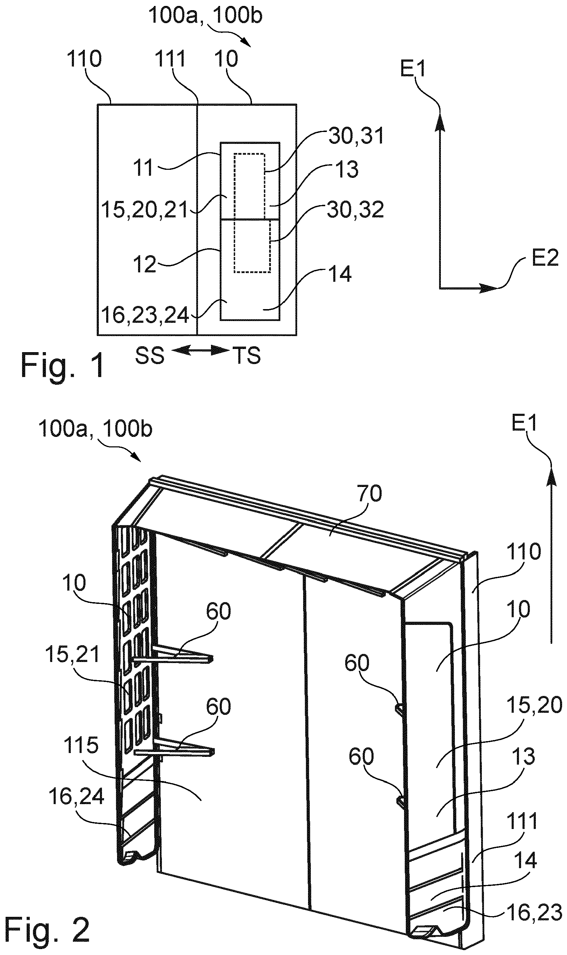

Fig. 1 shows a schematic of a trailer 100a, in particular for a utility vehicle 100b, according to an aspect of the disclosure.

In the following, the trailer 100a, in particular the trailer 100b for a utility vehicle, is referred to as trailer 100a, 100b. The trailer 100a, 100b is a land vehicle. The trailer 100a, 100b comprises a vehicle body 110, also called box. The vehicle body 110 comprises a rear 111 at which a door 115 (not indicated in Fig. 1, see Fig. 2) is arranged. The trailer 100a, 100b may be pulled by a motorized vehicle and/or another trailer which is in front of the trailer 100a, 100b (not indicated). The rear 111 is opposite to the front. The trailer 100a, 100b is optionally adapted to pull another trailer 100a, 100b (not shown).

The trailer 100a, 100b comprises an air guiding device 10. The air guiding device 10 is arranged at the rear 111. The air guiding device 10 is vertically arranged, see also Fig. 2.

As schematically illustrated by a double arrow in Fig. 1, the air guiding device 10 may transition between a travel state TS, also called an unfolded state, and a stowed sate SS, also called a folded state. The air guiding device 10 is lockable in each of the travel state TS and the stowed state SS.

The air guiding device 10 comprises a first air guiding section 11 and a second air guiding section 12 arranged side-by-side in a principal elongation direction E1 of the air guiding device 10.

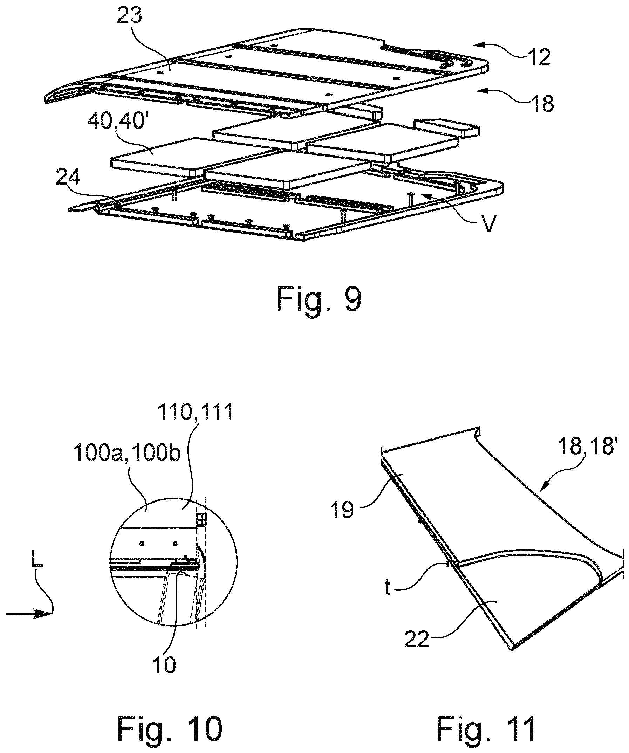

The air guiding device 10 comprises a panel 20, 21 defining a contour 13 of the first air guiding section 11. The air guiding device 10 comprises a shell 23, 24 defining a contour 14 of the second air guiding section 12. Alternatively and as described with reference to Fig. 11, the air guiding device 10 comprises a body 22 defining a contour 14 of the second air guiding section 12.

In Fig. 1, the air guiding device 10 comprises a frame 30 covered by the panel 20, 21 and by the shell 23, 24. The frame 30 comprises a first frame segment 31 extending through the first air guiding section 11 and being covered by the panel 20, 21 and a second frame segment 32 extending through the second air guiding section 12 and being covered by the shell 23, 24.

The first air guiding section 11 comprises a first surface portion 15 and the second air guiding section 12 comprises a second surface portion 16. The first surface portion 15 has a greater hardness than the second surface portion 16. The hardness of the second surface portion 16 is less than 60 Shore A according to DIN EN ISO 868, DIN ISO 7619-1 and/or ASTM D2240-00.

Fig. 2 shows a rear 111 of a trailer 100a, in particular for a utility vehicle 100b, according to an aspect of the disclosure. Therein, Fig. 2 shows a perspective view of the rear 111 of the trailer 100a, 100b as described with reference to Fig. 1. Fig. 2 is described with reference to Fig. 1 and its description.

In Fig. 2, the trailer 100a, 100b comprises a door 115, two air guiding devices 10 and further comprises a top air guiding device 70. Each of the two air guiding devices 10 is arranged vertically, i.e., the principal elongation direction E1 is parallel to a vertical direction. Each of the air guiding devices 10 is in the travel state TS. That is, each of the air guiding devices 10 is folded away from the door 115 and projects away from the door 115 and from the rear 111.

The two air guiding devices 10 are arranged laterally from the door 115, i.e., one of the air guiding devices 10 is arranged on the right from a centreplane of the door 115 and one of the air guiding devices 10 is arranged on the left from the centreplane of the door 115. The top air guiding device 70 is arranged above and between the two air guiding devices 10.

The trailer 100a, 100b comprises a folding mechanism 60 to perform a folding motion of the air guiding devices 10. The transition between the travel state TS and the stowed state SS is achieved by the folding motion of the air guiding device 10 towards the door 115 or away from the door 115. The folding mechanism 60 locks the air guiding devices 10 in the travel state TS or in the stowed state SS (not shown in Fig. 2). The folding mechanism 60 may be released to transition the air guiding devices 10 between the travel state TS and the stowed state SS.

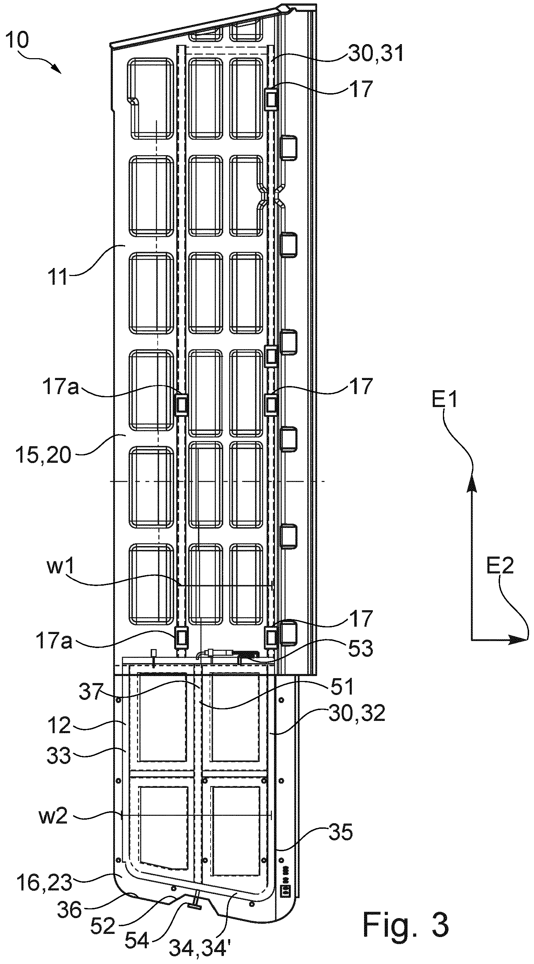

Fig. 3 shows a semi-transparent side view of an air guiding device 10 according to an aspect of the disclosure. The air guiding device 10 is the air guiding device as shown in Fig. 2. Fig. 3 is described under reference to Figs. 1 and 2. The semi-transparent view illustrates the air guiding device 10 and its components.

The air guiding device 10 comprises a plurality of mounting portions 17 and a plurality of second mounting portions 17a, each for mounting the air guiding device 10 to the trailer 100a, 100b. The mounting portions 17 and the second mounting portions 17a are adapted to be mounted to the folding mechanism 60 as illustrated in Fig. 2 to enable folding and/or unfolding the air guiding device 10.

In Fig. 3, the frame 30 is illustrated with dashed lines. The frame 30 is covered by the panel 20 of the first air guiding section 11 and the shell 23 of the second air guiding section 12. The frame 30 is subdivided into the first frame segment 31 and the second frame segment 32.

The first air guiding section 11 and the second air guiding section 12 are arranged side-by-side in the principal elongation direction E1. Similarly, the first frame segment 31 and the second frame segment 32 are arranged side-by-side in the principal elongation direction E1. The first frame segment 31 contributes to structural properties of the first air guiding section 11. The second frame segment 32 contributes to structural properties of the second air guiding section 12. The first frame segment 31 has a greater extension along the principal elongation direction E1 than the second frame segment 32. For example, the air guiding device 10 has an elongation in the principal elongation direction E1 of 2300 mm to 2700 mm. The first air guiding section 11 has an elongation in the principal elongation direction E1 of 1400 mm to 2000 mm, and the second air guiding section 11 has an elongation in the principal elongation direction E1 of 300 mm to 1300 mm. In one embodiment, the first air guiding section 11 has an elongation in the principal elongation direction E1 of 2000 mm, which may provide a rigid structure and defines an elongation of the panel 20, 21. The frame 30, in particular the second frame segment 32, and the shell 23, 24 has an elongation in the principal elongation direction E1 between 300 mm and 700 mm so that the air guiding device 10 has an elongation in the principal elongation direction E1 of 2300 mm to 2700 mm.

The first frame segment 31 has a first width w1. The second frame segment 32 has a second width w2. The first width w1 and the second width w2 defines the elongation of the frame 30 and its frame segments 31, 32 in a second direction E2 perpendicular to the principal elongation direction E1. The second width w2 is greater than the first width w1. For example, the first width w1 is 250 mm to 270 mm and the second width w2 is 400 mm to 450 mm. The second frame segment 32 extends further in the second direction E2 when viewed from the mounting portion 17 than the first frame segment 31. That is, the second frame segment 32 projects further away from the mounting portion 17 than the first frame segment 31. However, a width of the panel 20 and of the first air guiding section 10 (not indicated) is greater than a width of the shell 23 and of the second air guiding section (not indicated). For example, the width of the panel 20 is 580 mm to 600 mm and the width of the shell 23 is 490 mm to 540 mm.

The second frame segment 32 comprises a proximal end 35 and a distal end 33. In the second direction E2, the proximal end 35 is closer to the mounting portion 17 than the distal end 33. Each of the proximal end 35 and the distal end 33 is a subsection, such as a tubing, of the second frame segment 31 and extends parallel to the principal elongation direction E1. The proximal end 35 and the distal end 33 are parallel to each other. In another embodiment (not shown), the distal end 33 is arranged to enclose an angle with the principal elongation direction E1 in the range of 0° to 5°.

As shown in Fig. 3, the frame 30 extends more than 90 % throughout the air guiding device 10 the principal elongation direction E1. The second frame segment 12 extends more than 90 % throughout the second air guiding section 12 in the second direction E2.

The second frame segment 32 is shaped so that the proximal end 35 extends further in the principal elongation direction E1 than the distal end 33. That is, the second frame segment 32 extends further downwards closer to the mounting portion 17 than farther away from the mounting portion 17.

The second frame segment 32 comprises an outer frame portion 34. The outer frame portion 34 is a bent and curved profile 34'. In another embodiment (not shown), the outer frame portion 34 is a rod which is bent and/or curved. The outer frame portion 34 comprises the distal end 33 and the proximal end 35. The second frame segment 12 comprises a hollow frame segment 37. The hollow frame segment 37, e.g., a profile, is arranged between the distal end 33 and the proximal end 35. The hollow frame segment 37 is parallel to the distal end 33 and to the proximal end 35. The hollow frame segment 37 is surrounded by the outer frame portion 34.

The air guiding device 10 comprises an actuation member 53 for actuating the air guiding device 10 for transitioning between the travel state TS and the stowed state SS. The actuation member 53 is adapted to release the air guiding device 10 from being locked in the travel state TS and/or in the stowed state SS by a manual operation. The second air guiding section 12 comprises a recess 52 and the air guiding device 10 comprises 50 an operating member 54 for manually operating the actuation device 50, the operating member 54 being arranged in the recess 52.

The operating member 12 is a knob. The second air guiding section 12 comprises a lower end 36 and the recess 52 is arranged at the lower end 36. That is, the lower end 36 is arranged, in the principal elongation direction E1, opposite from the first air guiding section 10. The actuation member 53 is arranged at the first air guiding section 10.

The air guiding device 10 comprises a force transmission arrangement 51 arranged within the second air guiding section 12 and adapted to actuate the actuation member 53. The force transmission arrangement 51 is arranged between the actuation member 53 and the operating member 54. The force transmission arrangement 51 is arranged within the second frame segment 32. The force transmission arrangement 51 extends in the principal elongation direction E1 to mechanically interconnect the actuation member 53 and the operating member 54.

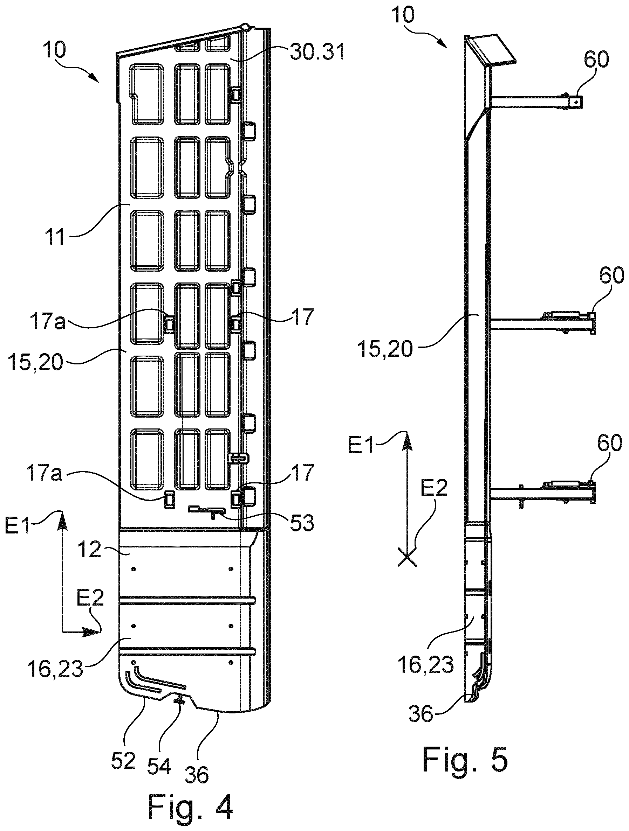

Fig. 4 shows a side view of an air guiding device 10 according to an aspect of the disclosure. The air guiding device 10 of Fig. 4 is the air guiding device 10 as described with reference to Figs. 1 to 3. Fig. 4 is described with reference to Figs. 1 to 3.

As shown in Fig. 4, the mounting portion 17, the second mounting portion 17a and the actuation device 53 are arranged on the same panel 20. Specifically, the mounting portion 17, the second mounting portion 17a and the actuation device 53 are arranged so as to, in the mounted state, be directed to a center of the rear 111 of the trailer 100a, 100b. That is, the mounting portion 17, the second mounting portion 17a and the actuation device 53 of the air guiding devices 10 (see Fig. 2) face each other.

Fig. 5 shows another side view of an air guiding device 10 according to an aspect of the disclosure. The air guiding device 10 of Fig. 5 is the air guiding device 10 as described with reference to Figs. 1 to 4. Fig. 5 is described with reference to Figs. 1 to 4.

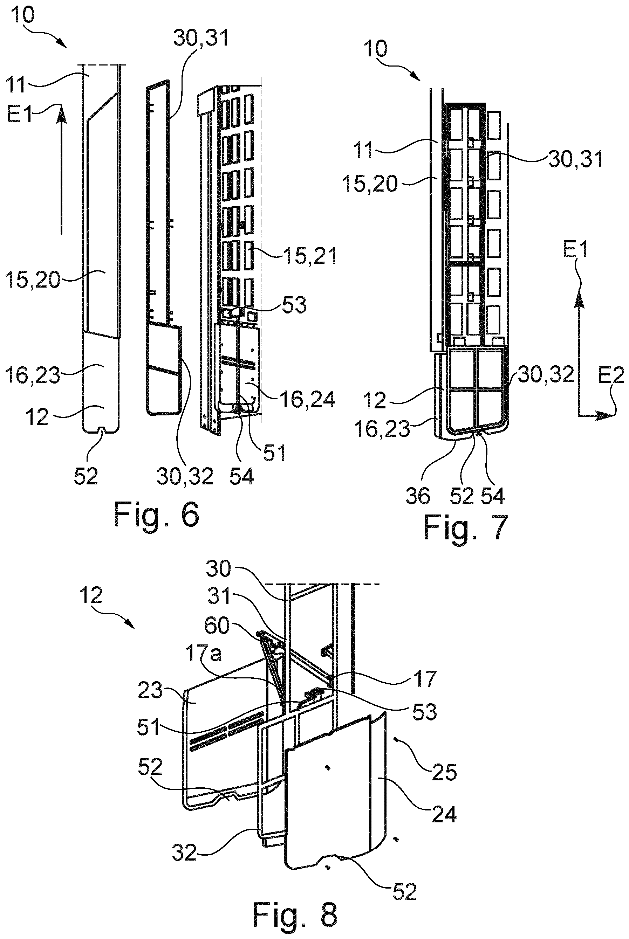

As shown in Fig. 5, the folding mechanism 60 is mounted to the panel 20. Specifically, the folding mechanism 60 is mounted to the mounting portions 17 and to the second mounting portions 17a (see also Fig. 8). With the folding mechanism 60 being mounted to the mounting portions 17 and to the second mounting portions 17a, the air guiding device 10 is adapted to be mounted to the trailer 100a, 100b.

Fig. 6 shows an exploded view of an air guiding device 10 according to an aspect of the disclosure. The air guiding device 10 of Fig. 6 is the air guiding device 10 as described with reference to Figs. 1 to 5. Fig. 6 is described with reference to Figs. 1 to 5.

The exploded view illustrates the air guiding device 10 comprising two panels 20, 21 and two shells 23, 24. The two panels 20, 21 define the contour 15 of the first air guiding section 11. The two shells 23, 24 define the contour 16 of the second air guiding section 12.

The first frame segment 31 is arranged between the panels 20, 21. The panels 20, 21 may be formed of a comparably rigid and/or hard polymer, e.g., acrylonitrile butadiene styrene (ABS). The panels 20, 21 cover and hide the first frame segment 31.

The second frame segment 32 is arranged between the shells 23, 24. The second air guiding section 12, the second frame segment 32 and the shells 23, 24 will be further explained with reference to Fig. 8.

Fig. 7 shows a semi-transparent side view of an air guiding device 10 according to an aspect of the disclosure. The air guiding device 10 of Fig. 7 is the air guiding device 10 as described with reference to Figs. 1 to 6. Fig. 7 is described with reference to Figs. 1 to 6. Fig. 7 is another illustration that may supplement the semi-transparent illustration of Fig. 3. In Fig. 7, the frame 30 and its two frame segments 31, 32 are highlighted.

Fig. 8 shows an exploded view of a detail of an air guiding device 10 according to an aspect of the disclosure. The air guiding device 10 of Fig. 8 is the air guiding device 10 as described with reference to Figs. 1 to 7. Fig. 8 is described with reference to Figs. 1 to 7.

The mounting portions 17 and the second mounting portion 17a are welded to the frame 30. The folding mechanism 60 is mounted to the mounting portions 17 and the second mounting portion 17a. The folding mechanism 60 is actuatable by the actuation device 53 to perform folding and/or unfolding of the air guiding device 10. The force transmission arrangement 51 comprises a cable between the actuation device 53 and the operation member 54. The force transmission arrangement 51 is arranged within the hollow frame segment 37.

The shells 23, 24 and the second frame segment 32 form a sandwich structure. Therein, shells 23, 24 are attached on two opposite sides of the second frame segment 32 onto the second frame segment 32 at a bottom area of air guiding device 10. The shells 23, 24 made be made of polyurethane (PU) and/or polyethylene (PE). The shells 23, 24 may be made from an expanded material and may comprise an inner reinforcement such as a mesh. The shells 23, 24 are mounted to each other and/or to the frame by fasteners 25. Alternatively or additionally, the shells 23, 24 may be glued. Thus, the second air guiding section 12 comprises a layered structure 18 being formed by the shells 23, 24 and the second frame segment 32.

The shells 23, 24 may have a hardness of less than 60 Shore A. Alternatively, the shells 23, 24 may comprise an outer layer 19 formed on the shells 23, 24 with a hardness of less than 60 Shore A. Such an outer layer 19 is described with reference to Fig. 11.

Fig. 9 shows an exploded view of an air guiding device 10 according to an aspect of the disclosure. The air guiding device 10 of Fig. 9 is the air guiding device 10 as described with reference to Figs. 1 to 8. Fig. 9 is described with reference to Figs. 1 to 8.

The air guiding device 10 comprises a volume v between the second frame segment 32 (not indicated in Fig. 9) and/or the shells 23, 24. Thus the volume v is surrounded by the second surface portion 16. The air guiding device 10 comprises a filling member 40 arranged to fill the volume v.

The filling member 40 comprises a foam as a volume filler 40'.

The filling member 40 and/or the volume filler 40' may have any hardness. The filling member 40 and/or the volume filler 40' is adapted to aid in making the second air guiding section 12 rigid. In this case, the shells 23, 24 may form an outer layer 19. The shells 23, 24 may have a thickness of at least 6 mm and a hardness of less than 60 Shore A.

Fig. 10 shows a detail of a trailer 100a, in particular a trailer 100b for a utility vehicle, with an air guiding device 10, each according to an aspect of the disclosure. The air guiding device 10 of Fig. 9 is the air guiding device 10 as described with reference to Figs. 1 to 9 and the trailer 100a, 100b is described with reference to Figs. 1 and 2. Fig. 10 is described with reference to Figs. 1 to 9.

The trailer 100a, 100b defines a lateral direction L. The lateral direction L is perpendicular to a vertical direction (pointing into the drawing plane in Fig. 10, not indicated) and to a forward direction of the trailer 100a, 100b (not indicated).

The second guiding section 12 is arranged so that it projects, in the lateral direction L, from a vehicle body 110 of the trailer 100a. In other words, installed on the trailer 100a, 100b, the tail's soft bottom component, i.e., the second air guiding section 12, and the ABS upper portion of the side panel, i.e., the first air guiding section 11, overlap to the trailer side. Therefore, the system is arranged not only behind but also at the sides of the trailer 100a, 100b.

Fig. 11 shows a sample of a second air guiding section 12 of an air guiding device 10 according to an aspect of the disclosure. Fig. 11 shows an alternative embodiment of the second air guiding section 12. Fig. 11 is described with reference to Figs. 1 to 10, wherein differences between the second air guiding sections 12 are described.

In Fig. 11, the second air guiding section 12 comprises a body 22. The body 22 and the frame 30, i.e., the second frame segment 32, are integrally formed. The body 22 and the frame 30 are an integral part. The body 22 may be made of PU as described above. The body 22 defines the contour 14 of the second air guiding section 12.

Therein, the metal frame 30 is sunken into the body 22 to make an integral part without a possibility to disassemble the frame 30 and the body 22. The sunken frame 30 results in an integral body connection to the frame 30 without the use of fasteners.

The second air guiding section 12 comprises a layered structure 18 which is a glued or overmolded structure 18'. Therein, the body 22 is covered by an outer layer 19. Thus, the second surface portion 16 comprises the outer layer 19 and/or is formed by the outer layer 19. The outer layer 19 has a thickness t of 6 mm or more.

The overmolded structure 18' means that a coating layer of a soft polymer, e.g. PU, with a thickness of no less than 6mm is applied, e.g., sprayed, onto the body 22 to form the outer layer 19. This makes it possible to maintain flush surfaces after over-molding and fasteners 25 may be dispensed with.

The glued structure 18' means that a layer, e.g., a thermoplastic polyurethane, TPU, of at least 6mm is glued onto the body 22 as the outer layer 19. The material can be thermoformed on top of the body 22 to result in a preferred shaping. Fasteners 25 may need to be used to prevent material separation.

Alternatively, the layered structure 18 comprises an overlay rubber part as outer layer 19. That is, the outer layer 19 is formed by a soft material cap, e.g., rubber or silicone, with material hardness of < 60 Shore A, which is an integral part with a hollow space inside which allows to slide the outer layer 19 onto the body 22.

In another embodiment (not shown), the body 22 may be soft so that the outer layer 19 may be dispensed with.

### Reference signs (Part of the description)

- 10: air guiding device
- 11: first air guiding section
- 12: second air guiding section
- 13: contour of first air guiding section
- 14: contour of second air guiding section
- 15: first surface portion
- 16: second surface portion
- 17: mounting portion
- 17a: second mounting portion
- 18: layered structure
- 18': glued and/or overmolded structure
- 19: outer layer

- 20: panel
- 21: panel
- 22: body
- 23: shell
- 24: shell
- 25: fastener

- 30: frame
- 31: first frame segment
- 32: second frame segment
- 33: distal end
- 34: outer frame portion
- 34': profile
- 35: proximal end
- 36: lower end
- 37: hollow frame segment

- 40: filling member
- 40': volume filler
- 50: actuation device
- 51: force transmission arrangement
- 52: recess
- 53: actuation member
- 54: operating member

- 60: folding mechanism

- 70: top air guiding device

- 100a: trailer
- 100b: utility vehicle
- 110: vehicle body
- 111: rear
- 115: door

- E1: principal elongation direction
- E2: second direction
- L: lateral direction
- SS: stowed state
- t: thickness
- TS: travel state
- v: volume
- w1: first width
- w2: second width

## Claims

1. Air guiding device (10) for a trailer (100a), in particular for a utility vehicle (100b), wherein the air guiding device (10) comprises:
- a first air guiding section (11) and a second air guiding section (12) arranged side-by-side in a principal elongation direction (E1) of the air guiding device (10),
- a panel (20, 21) defining a contour (13) of the first air guiding section (11), and
- a frame (30) comprising a first frame segment (31) extending through the first air guiding section (11) and being covered by the panel (20, 21) and a second frame segment (32) extending through the second air guiding section (12), wherein
- a first surface portion (15) of the first air guiding section (11) has a greater hardness than a second surface portion (16) of the second air guiding section (12).

2. Air guiding device (10) as claimed in claim 1, wherein
- the first frame segment (31) has a first width (w1) and
- the second frame segment (32) has a second width (w2), wherein
- the second width (w2) is greater than the first width (w1).

3. Air guiding device (10) as claimed in claim 1 or 2, wherein
- the air guiding device (10) comprises a mounting portion (17) for mounting the air guiding device (10) to the trailer (100a), and
- the second frame segment (32) extends further in a second direction (E2) perpendicular to the principal elongation direction (E1) when viewed from the mounting portion (17) than the first frame segment (31).

4. Air guiding device (10) as claimed in any one of the preceding claims, wherein the second frame segment (32) comprises a distal end (33)
- arranged in parallel to the principal elongation direction (E1) and/or
- arranged to enclose an angle with the principal elongation direction (E1) in the range of 0° to 5°.

5. Air guiding device (10) as claimed in any one of the preceding claims, wherein the frame (30) extends more than 90 % throughout the air guiding device (10) in the principal elongation direction (E1) and/or in a second direction (E2) perpendicular to the principal elongation direction (E1).

6. Air guiding device (10) as claimed in any one of the preceding claims, wherein the second frame segment (32) comprises an outer frame portion (34), wherein the outer frame portion (34) is a bent and/or curved profile (34') and/or rod.

7. Air guiding device (10) as claimed in any one of the preceding claims, wherein
- the air guiding device (10) comprises a mounting portion (17) for mounting the air guiding device (10) to the trailer (100a),
- the second frame segment (32) comprises a proximal end (35) and a distal end (33), wherein the proximal end (35) is closer to the mounting portion (17) than the distal end (33), and
- the second frame segment (32) is shaped so that the proximal end (35) extends further in the principal elongation direction (E1) than the distal end (33).

8. Air guiding device (10) as claimed in any one of the preceding claims, wherein the air guiding device (10) comprises a body (22) defining a contour (14) of the second air guiding section (12) and the body (22) and the frame (30) are integrally formed.

9. Air guiding device (10) as claimed in any one of the preceding claims, wherein the second air guiding section (12) comprises a layered structure (18).

10. Air guiding device (10) as claimed claim 9, wherein the layered structure (18) is a glued and/or overmolded structure (18').

11. Air guiding device (10) as claimed in any one of the preceding claims, wherein the air guiding device (10) comprises two shells (23, 24) defining a contour (14) of the second air guiding section (12), wherein the frame (30) is arranged between the shells (23, 24).

12. Air guiding device (10) as claimed in any one of the preceding claims, wherein the second surface portion (16) comprises an outer layer (19) with a thickness (t) of 6 mm or more.

13. Air guiding device (10) as claimed in any one of the preceding claims, wherein the air guiding device (10) comprises a filling member (40) arranged to fill a volume (v) surrounded by the first surface portion (15) and/or the second surface portion (16).

14. Air guiding device (10) as claimed in claim 13, wherein the filling member (40) comprises a volume filler (40').

15. Air guiding device (10) as claimed in any one of the preceding claims, wherein the air guiding device (10) comprises an actuation member (53) for actuating the air guiding device (10) for transitioning between a travel state (TS) and a stowed state (SS).

16. Air guiding device (10) as claimed in 15, wherein the actuation member (53) is adapted to release the air guiding device (10) from being locked in the travel state (TS) and/or in the stowed state (SS) by a manual operation.

17. Air guiding device (10) as claimed in claim 15 or 16, wherein the air guiding device (10) comprises a force transmission arrangement (51) arranged within the second air guiding section (12) and adapted to actuate the actuation member (53).

18. Air guiding device (10) as claimed in 17, wherein the force transmission arrangement (51) is arranged within the second frame segment (32).

19. Air guiding device (10) as claimed in any one of claims 15 to 18, wherein the second air guiding section (12) comprises a recess (52) and the air guiding device (10) comprises (50) an operating member (54) for manually operating the actuation device (50), the operating member (54) being arranged in the recess (52).

20. Air guiding device (10) as claimed in claim 19, wherein the second air guiding section (12) comprises a lower end (36) and the recess (52) is arranged at the lower end (36).

21. Air guiding device (10) as claimed in any one of the preceding claims, wherein the second guiding section (12) is arrangeable so that it projects, in a lateral direction (L), from a vehicle body (110) of the trailer (100a).

22. Trailer (100a), in particular for a utility vehicle (100b), comprising a vehicle body (110) with a rear (111) and an air guiding device (10) as claimed in any one of the preceding claims, wherein the air guiding device (10) is arranged at the rear (111).
